# EUROPÄISCHE PATENTANMELDUNG

(11) **EP 4 354 232 A1**
(43) Veröffentlichungstag der Anmeldung: **17.04.2024**
(21) Anmeldenummer: 22200883.1
(22) Anmeldetag: 11.10.2022
(51) Int. Cl.: G05B 13/02, B21B 37/00

(54) **VERFAHREN UND SYSTEM ZUM ANPASSEN EINES FERTIGUNGSPROZESSES**

(71) Anmelder: Primetals Technologies Germany GmbH, 91058 Erlangen (DE)
(72) Erfinder: Gurrath, Karola, 91080 Uttenreuth (DE); Löffler, Hans-Ulrich, 91054 Erlangen (DE); Sparrer, Susanne, 91054 Erlangen (DE); Thekale, Alexander, 91058 Erlangen (DE); Döll, Rüdiger, 90409 Nürnberg (DE); Rein, Rolf Martin, 90762 Fürth (DE)
(74) Vertreter: Metals@Linz

(57) **Zusammenfassung**

Die vorliegende Erfindung betrifft ein Verfahren (100) und ein System (1) zum Anpassen eines Fertigungsprozesses (P), insbesondere eines Warmwalzprozesses, sowie die Verwendung des Verfahrens (100) zum regulären Betrieb einer Anlage (10). Dabei wird i) eine Erzeugniseigenschaft (E*) eines Prozesserzeugnisses (2) vorgegeben (S1). Zudem wird ii) ein Betriebsausgangspunkt (X) einer Anlage (10), insbesondere einer Warmwalzanlage, die zum Ausführen eines Fertigungsprozesses (P) zum Erzeugen des Prozesserzeugnisses (2) eingerichtet ist, vorgegeben (S2) und iii) das Prozesserzeugnis (2) erzeugt, indem der Fertigungsprozess (P) mithilfe der Anlage (10) ausgehend vom vorgegebenen Betriebsausgangspunkt (X) ausgeführt wird (S3). Es wird iv) eine tatsächliche Erzeugniseigenschaft (E) des erzeugten Prozesserzeugnisses (2) ermittelt (S4) und v) ein optimierter Betriebspunkt (X*) der Anlage (10) auf Grundlage der vorgegebenen Erzeugniseigenschaft (E*) und der ermittelten tatsächlichen Erzeugniseigenschaft (E) mithilfe eines Optimierers (30) ermittelt (S5).

## Beschreibung

### Gebiet der Technik

Die vorliegende Erfindung betrifft ein Verfahren und ein System zum Anpassen eines Fertigungsprozesses, insbesondere eines Warmwalzprozesses, sowie die Verwendung des Verfahrens zum regulären Betrieb einer Anlage.

### Stand der Technik

Zur Inbetriebnahme von Anlagen, zum Beispiel Warmwalzanlagen, ist es üblicherweise notwendig, verschiedenste Parameter der Anlage richtig einzustellen, um im späteren Betrieb der Anlage ein Erzeugnis mit gewünschten Eigenschaften erhalten zu können.

Dazu ist es bekannt, ein Modell der Anlage zu erstellen und unter der Vorgabe eines Zielwerts, welcher die gewünschten Erzeugniseigenschaften repräsentiert, durchzurechnen. Als Eingangsgrößen des Modells dienen zweckmäßigerweise angenommene äußere Einflüsse, zum Beispiel in Form von parametrierten Umgebungsbedingungen, und Modellparameter (sog. Inbetriebsetztungs-Parameter, kurz IBS-Parameter, welche das Modellverhalten steuern oder Regelkurven parametrisieren). Ein solches Modell kann Stellgrößen ausgeben, mit denen die Anlage betreibbar ist. Gegebenenfalls können zumindest einzelne Modellparameter optimiert werden, indem die Anlage mehrmals mit den initial berechneten Stellgrößen betrieben wird und die Eigenschaften des dabei erzeugten Erzeugnisses mit den gewünschten Eigenschaften verglichen werden.

Problematisch ist hierbei jedoch, dass die einmal auf Grundlage der gewählten Modelleingangsgrößen in Betrieb genommene Anlage üblicherweise sich ändernden äußeren Einflüssen ausgesetzt ist und/oder dieselben Stellgrößen über längere Zeiträume zu unterschiedlichen Erzeugniseigenschaften führen, etwa aufgrund von Alterung/Verschleiß der Anlage.

Es gibt darüber hinaus auch Fertigungsprozesse, die für eine ausreichend präzise Modellierung zu komplex sind oder deren Modellierung jedenfalls extrem zeitaufwändig bzw. rechenintensiv ist. Wenn kein hinreichend präzises Modell gefunden oder genutzt werden kann, können auch die IBS-Parameter nicht automatisch über einen Algorithmus optimiert werden. In solchen Fällen müssen die IBS-Parameter manuell ermittelt werden. Dies erfordert jedoch viel Erfahrung des entsprechenden Personals und ist ebenfalls sehr zeitaufwändig.

### Zusammenfassung der Erfindung

Vor diesem Hintergrund ist es eine Aufgabe der vorliegenden Erfindung, ein verbessertes Verfahren und ein verbessertes System anzugeben, mit dem auch komplexe Fertigungsprozesse automatisch anpassbar und/oder Eigenschaften von Prozesserzeugnissen über lange Zeiträume konstant gehalten werden können. Es ist zudem eine Aufgabe der vorliegenden Erfindung, einen entsprechenden Betrieb einer Anlage zu ermöglichen.

Diese Aufgaben werden gelöst durch ein Verfahren und ein System zum Anpassen eines Fertigungsprozesses sowie eine Verwendung des Verfahrens gemäß den unabhängigen Ansprüchen.

Bevorzugte Ausführungsformen sind Gegenstand der abhängigen Ansprüche und der folgenden Beschreibung.

Beim Verfahren gemäß dem ersten Aspekt der Erfindung zum, insbesondere automatischen, Anpassen eines Fertigungsprozesses, insbesondere eines Warmwalzprozesses, wird i) eine Erzeugniseigenschaft eines Prozesserzeugnisses vorgegeben. Zudem wird ii) ein Betriebsausgangspunkt einer Anlage, insbesondere einer Warmwalzanlage, die zum Ausführen eines Fertigungsprozesses zum Erzeugen des Prozesserzeugnisses eingerichtet ist, vorgegeben und iii) das Prozesserzeugnis erzeugt, indem der Fertigungsprozess mithilfe der Anlage ausgehend vom vorgegebenen Betriebsausgangspunkt ausgeführt wird. Es wird iv) eine tatsächliche Erzeugniseigenschaft des erzeugten Prozesserzeugnisses ermittelt und v) ein optimierter Betriebspunkt der Anlage auf Grundlage der vorgegebenen Erzeugniseigenschaft und der ermittelten tatsächlichen Erzeugniseigenschaft mithilfe eines Optimierers ermittelt.

Ein Fertigungsprozess im Sinne der Erfindung ist vorzugsweise ein technischer Prozess, bei dem ein Erzeugnis hergestellt, d. h. erzeugt, wird. Das Erzeugnis muss nicht zwingend ein "fertiges" (End-) Produkt sein, vielmehr kann es sich auch um ein Halbzeug handeln. Ein Fertigungsprozess kann insofern auch ein Teil eines größeren Herstellungsprozesses eines Endprodukts sein, etwa das Warmwalzen einer Bramme, insbesondere eine in der Vorstraße durchgeführte Breitenumformung mithilfe eines Vertikalgerüsts.

Ein Optimierer im Sinne der Erfindung ist vorzugsweise ein Mittel zum, insbesondere iterativen, Lösen eines Optimierungsproblems. Beispielsweise kann ein Optimierer dazu eingerichtet sein, einen oder mehrere Werte für Prozessparameter zu ermitteln, mit denen ein Prozess ein gewünschtes Ergebnis liefert. Zweckmäßigerweise verwendet der Optimierer eine vorgegebene Optimierungsstrategie, um das Optimierungsproblem zu lösen. Beispielsweise können gemäß der Optimierungsstrategie ausgewählte Prozessparameter variiert und ausgehend von dem dadurch resultierenden Prozessergebnis die Variation der Prozessparameter angepasst werden, sodass das Prozessergebnis gegen das gewünschte Ergebnis konvergiert.

Vorzugsweise basiert ein Optimierer auf einem Optimierungsalgorithmus. Der Optimierungsalgorithmus kann die Optimierungsstrategie verkörpern.

Eine Ausführung eines Fertigungsprozesses mithilfe einer Anlage ausgehend von einem vorgegebenen Betriebsausgangspunkt im Sinne der Erfindung bedeutet vorzugsweise das Betreiben der Anlage im vorgegebenen Betriebsausgangspunkt oder zumindest in einem Betriebspunkt, der auf Grundlage vom vorgegebenen Betriebsausgangspunkt ermittelt wird. Es kann jedoch vorkommen, dass trotzt einem entsprechenden Einstellen von Betriebsparametern die Anlage nicht im gewünschten Betriebspunkt, z.B. dem vorgegebenen Betriebsausgangspunkt, arbeitet. Eine derartige Ausführung des Fertigungsprozesses kann vorteilhaft aber ebenfalls als Ausführung mithilfe der Anlage ausgehend vom vorgegebenen Betriebsausgangspunkt verstanden werden.

Ein Aspekt der Erfindung basiert auf dem Ansatz, einen Optimierer zum Ermitteln eines optimalen Betriebspunktes, in dem eine Anlage ein Prozesserzeugnis mit einer vorgegebenen Erzeugniseigenschaft erzeugt, in Verbindung mit dem (realen) Betrieb der Anlage einzusetzen. Insbesondere kann dabei eine dem Optimierer zugrunde liegende Optimierungsstrategie durch ein Betreiben der Anlage umgesetzt werden. Die Anlage kann insofern vom Optimierer iterativ zum Ermitteln des optimalen Betriebspunkts (oder eines Betriebspunkts, der dem optimalen Betriebspunkt zumindest sehr nahe kommt) betrieben werden. Zweckmäßigerweise gibt der Optimierer dabei Rahmenbedingungen vor, zum Beispiel eine Variation von Betriebsparametern der Anlage bzw. die entsprechenden Betriebsparameterwerte, unter denen die Anlage betrieben werden soll. Durch eine Analyse des mit dem Anlagenbetrieb ausgeführten Fertigungsprozesses, insbesondere des erzeugten Prozesserzeugnisses, kann der Optimierer optimierte Betriebsparameterwerte vorschlagen, die voraussichtlich die Produktion des Prozesserzeugnisses mit einer Erzeugniseigenschaft ermöglichen, die näher an der vorgegebenen Erzeugniseigenschaft liegt. Dabei ist es nicht notwendig, dass der Optimierer ein Modell oder eine sogenannte (mathematisch formulierte) Zielfunktion, welche den Fertigungsprozess charakterisiert, auswertet. Die Umsetzung der Optimierungsstrategie durch den (realen) Betrieb der Anlage bzw. die Auswertung des damit verbundenen Fertigungsprozesses, insbesondere über einen längeren Zeitraum, erlaubt dabei vorteilhaft auch die Berücksichtigung sich ändernder Betriebsbedingungen. Zum Beispiel können die Änderungen äußerer Einflüsse und/oder Änderungen des Anlagenzustands etwa aufgrund von Alterung berücksichtigt werden.

Um einen Fertigungsprozess anzupassen, kann ein Optimierungsalgorithmus beispielsweise in einzelne Berechnungsschritte aufgeteilt werden. Zweckmäßigerweise steht dabei am Ende jedes Berechnungsschrittes eine Auswertung des Fertigungsprozesses mit durch den Optimierungsalgorithmus vorgegebenen Prozessparameterwerten, d. h. in einem vorgegebenen Betriebsausgangspunkt, an. Diese Auswertung wird in bevorzugter Weise durch Betreiben der Anlage ausgehend vom vorgegebenen Betriebsausgangspunkt, der durch die vorgegebenen Prozessparameterwerte charakterisiert ist, durchgeführt. Insofern kann hier statt einem Aufruf einer Zielfunktion für eine bestimmte Parameterzusammensetzung die Auswertung eines tatsächlichen physikalischen Vorgangs für eben diese Parameterzusammensetzung erfolgen. Das Ergebnis der Auswertung kann dann der Berechnung aktualisierter Prozessparameterwerte, d. h. eines optimierten Betriebspunkts, im nächsten Berechnungsschritt zugrunde gelegt werden.

Die Auswertung des Fertigungsprozesses erfolgt dabei in bevorzugter Weise durch Ermitteln einer tatsächlichen Erzeugniseigenschaft des durch den Fertigungsprozess erzeugten Prozesserzeugnisses. Insbesondere lässt sich die ermittelte tatsächliche Erzeugniseigenschaft mit der vorgegebenen Erzeugniseigenschaft vergleichen. Das Vergleichsergebnis kann eine Güte der tatsächlichen Erzeugniseigenschaft des erzeugten Prozesserzeugnisses darstellen. Ausgehend von dieser Güte kann der Optimierer optimierte Prozessparameterwerte, d. h. einen optimierten Betriebspunkt für die Anlage, bestimmen.

Mithilfe eines derartigen Verfahrens zum Anpassen eines Fertigungsprozesses kann der Aufwand - und damit auch die Kosten - für die Inbetriebsetzung einer Anlage gegenüber manuellen Verfahren deutlich gesenkt werden. Zugleich kann eine gleichbleibend gute Qualität der mithilfe der Anlage erzeugten Prozesserzeugnisse sichergestellt werden. Insbesondere kann ein optimaler Betriebspunkt der Anlage leicht angepasst werden, wenn neue Produktspektren erzeugt werden oder sich der Anlagenzustand verändert.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer bevorzugten Ausführungsform wird das Erzeugen des Prozesserzeugnisses mithilfe der Anlage anstelle der Auswertung einer mathematischen Zielfunktion durch den Optimierer durchgeführt. Dadurch lässt sich der Fertigungsprozess mithilfe eines konventionellen Optimierers, insbesondere eines konventionellen Optimierungsalgorithmus, anpassen. Beispielsweise kann so auch mithilfe eines konventionellen Optimierers eine Anlage in Betrieb gesetzt werden, für die ein Modell bzw. eine mathematische Zielfunktion nicht erstellbar ist.

In einer weiteren bevorzugten Ausführungsform wird das Verfahren mit der vorgegebenen Erzeugniseigenschaft, d. h. unter Beibehaltung der vorgegebenen Erzeugniseigenschaft, kontinuierlich wiederholt. Insbesondere kann im regulären Betrieb der Anlage fortlaufend ein optimaler Betriebspunkt neu bestimmt bzw. aktualisiert werden. Dadurch lassen sich gegebenenfalls Änderungen der Betriebsbedingungen, zum Beispiel Änderungen der äußeren Einflüsse oder Änderungen der Anlageneigenschaften etwa aufgrund von Alterung oder Verschleiß, ausgleichen und somit eine gleichbleibend gute Qualität der Prozesserzeugnisse erzielen.

Zweckmäßigerweise wird dabei der jeweils ermittelte optimierte Betriebspunkt bei der entsprechend darauffolgenden Wiederholung als Betriebsausgangspunkt vorgegeben. Insofern kann der Optimierer ausgehend von einem zuvor ermittelten optimierten Betriebspunkt prüfen, ob der Betrieb der Anlage in einem hinsichtlich der vorgegebenen Erzeugniseigenschaft geeigneteren Betriebspunkt möglich ist. Damit kann eine, insbesondere dauerhafte, Konvergenz der tatsächlichen Erzeugniseigenschaft gegen die vorgegebene Erzeugniseigenschaft sichergestellt werden.

Alternativ kann der jeweils ermittelte optimierte Betriebspunkt bei der entsprechend darauffolgenden Wiederholung einer Vorgabe des Betriebsausgangspunkts zugrunde gelegt werden. Anders gesagt kann der Betriebsausgangspunkt vorgegeben werden, indem der Betriebsausgangspunkt ausgehend vom ermittelten optimierten Betriebspunkts ermittelt, zum Beispiel aus dem ermittelten optimierten Betriebspunkt abgeleitet, wird. Es ist beispielsweise denkbar, dass ein oder mehrere Betriebspunkte in der Nähe des ermittelten optimierten Betriebspunktes als Betriebsausgangspunkt vorgegeben werden. Ein Betriebspunkt in der Nähe des ermittelten optimierten Betriebspunkts kann dabei unter Berücksichtigung vorgegebener Regeln, d. h. etwa durch einen vorgegebenen Auswahl- oder Ermittlungsprozess, zum Beispiel gemäß einer vorgegebenen Optimierungsstrategie, ermittelt werden. Hierdurch lässt sich die Konvergenz der tatsächlichen Erzeugniseigenschaft gegen die vorgegebene Erzeugniseigenschaft unter Umständen beschleunigen.

Es ist aber auch denkbar, dass der Betriebsausgangspunkt ausgehend vom ermittelten optimierten Betriebspunkt zufällig gewählt wird. Grundsätzlich muss der vorgegebene Betriebsausgangspunkt auch nicht in der Nähe des ermittelten optimierten Betriebspunkts liegen.

In einer weiteren bevorzugten Ausführungsform werden mehrere Prozesserzeugnisses erzeugt, indem der Fertigungsprozess mithilfe der Anlage ausgehend vom vorgegebenen Betriebsausgangspunkt in unterschiedlichen Betriebspunkten durchgeführt wird. Anders gesagt kann das Verhalten der Anlage - und damit der korrespondierende Fertigungsprozess - in mehreren Betriebspunkten getestet werden, bevor der Optimierer einen optimierten Betriebspunkt ermittelt. Beispielsweise kann der Fertigungsprozess mithilfe der Anlage in unterschiedlichen Betriebspunkten in der Nähe des vorgegebenen Betriebsausgangspunktes durchgeführt werden. Hierdurch lassen sich insbesondere sogenannte Gradienten für verschiedene Prozessparameter ermitteln, auf deren Grundlage der Optimierer letztendlich den optimierten Betriebspunkt ermittelt.

Die unterschiedlichen Betriebspunkte können ausgehend vom vorgegebenen Betriebsausgangspunkt, z. B. von einem zuvor ermittelten optimierten Betriebspunkt, durch eine Variation wenigstens eines Betriebsparameters der Anlage gewählt werden. Dabei sollte beachtet werden, dass bei einem mehrmaligen Durchführen des Fertigungsprozesses im gleichen Arbeitspunkt der Anlage die tatsächliche Erzeugniseigenschaft nie genau gleich ist. Solche Streuungen, die auch als natürliches Rauschen des Prozesses bezeichnet werden, sind in der Regel unvermeidbar, da jede Anlagenkomponente nur innerhalb eines gewissen Toleranzbereichs "präzise" ist. Infolgedessen kann eine Standardabweichung als Maß für die Streuung der Erzeugniseigenschaft ermittelt werden. Der Betriebsparameter wird zum Ermitteln der Betriebspunkte daher bevorzugt so stark verändert, dass die Erzeugniseigenschaft sich um mehr als die Standardabweichung der Erzeugniseigenschaft ändert. Vor diesem Hintergrund ist ein Betriebspunkt in der Nähe des vorgegebenen Betriebsausgangspunkts ist vorzugsweise ein Betriebspunkt, der ausgehend vom vorgegebenen Betriebsausgangspunkt durch eine Variation eines Betriebsparameters der Anlage von maximal 10 %, bevorzugt maximal 5 %, insbesondere maximal 2 % erhalten wird, so lange die damit verbundene Änderung der Erzeugniseigenschaft größer als die Standardabweichung der Erzeugniseigenschaft ist. Andere Betriebsparameter bleiben dabei zweckmäßigerweise unverändert.

Zweckmäßigerweise wird für jedes erzeugte Prozesserzeugnis die tatsächliche Erzeugniseigenschaft ermittelt. Entsprechend ist es bevorzugt, dass der optimierte Betriebspunkt auf Grundlage der vorgegebenen Erzeugniseigenschaft und der mehreren ermittelten tatsächlichen Erzeugniseigenschaften ermittelt wird. Insofern kann der Optimierer prüfen, in welchem der unterschiedlichen Betriebspunkte - d. h. mit welchen Prozessparametervariationen - das beste Ergebnis hinsichtlich der vorgegebenen Erzeugniseigenschaft erzielt wird. Der entsprechende Betriebspunkt kann als aussichtsreichster Kandidat zum Erreichen der vorgegebenen Erzeugniseigenschaft als optimierter Betriebspunkt bereitgestellt werden, zum Beispiel als neuer Ausgangspunkt für den Optimierungsprozess.

Um einen effektiven Ablauf des Verfahrens ermöglichen zu können, wird in einer weiteren bevorzugten Ausführungsform die Streuung tatsächlicher Erzeugniseigenschaften von Prozesserzeugnissen, die beim mehrmaligen Durchführen des Fertigungsprozesses in demselben Betriebspunkt der Anlage erhalten werden, ermittelt. Beispielsweise kann die Standardabweichung als ein Maß für die Streuung der Erzeugniseigenschaft ermittelt werden. Das Maß für die ermittelte Streuung wird vorzugsweise einer Ermittlung der unterschiedlichen Betriebspunkte zugrunde gelegt. Anders gesagt kann ein Abstand, insbesondere ein Mindestabstand, zwischen den verschiedenen Betriebspunkten untereinander und/oder zum vorgegebenen Betriebsausgangspunkt, zum Beispiel dem zuletzt ermittelten optimierten Betriebspunkt, auf Grundlage der ermittelten Streuung festgelegt werden. Beispielsweise kann die Stärke der Variation wenigstens eines Betriebsparameters der Anlage von der Stärke der ermittelten Streuung abhängen. Dadurch kann sichergestellt werden, dass ein Unterschied zwischen der ermittelten tatsächlichen Erzeugniseigenschaft und der vorgegebenen Erzeugniseigenschaft auf eine Änderung des Betriebspunktes zurückgeht und nicht nur auf ein "Rauschen".

Vorzugsweise werden die unterschiedlichen Betriebspunkte in der Nähe des vorgegebenen Betriebsausgangspunktes durch Variation jeweils eines von mehreren Betriebsparametern bestimmt. Zweckmäßigerweise entspricht dies jeweils der Variation eines Prozessparameters. Jede Variation eines Betriebsparameters kann eine Gradientenbildung in einer Richtung im entsprechenden Parameterraum darstellen. Die derart für verschiedene Betriebsparameter ermittelten Gradienten sind zweckmäßigerweise linear unabhängig, in einer Weiterbildung sogar zueinander orthogonal, im Betriebsparameterraum. Anhand den jeweiligen, mit den Variationen bzw. den gebildeten Gradienten korrespondierenden ermittelten tatsächlichen Erzeugniseigenschaften kann der Optimierer entscheiden, in welcher Richtung im Parameterraum die Suche nach einem optimalen Betriebspunkt fortgesetzt werden soll.

In einer weiteren bevorzugten Ausführungsform werden mehrere Prozesserzeugnisse erzeugt, indem der Fertigungsprozess mithilfe der Anlage mehrmals in demselben Betriebspunkt durchgeführt wird. Damit kann die mit dem Betriebspunkt korrespondierende Erzeugniseigenschaft präziser bestimmt werden. Insbesondere kann eine Standardabweichung, welche als Maß für gegebenenfalls auftretende Streuungen hinsichtlich der Erzeugniseigenschaft des jeweils erzeugten Prozesserzeugnisses dient, ermittelt werden.

Zweckmäßigerweise wird entsprechend für jedes erzeugte Prozesserzeugnis die tatsächliche Erzeugniseigenschaft ermittelt und der optimierte Betriebspunkt auf Grundlage der vorgegebenen Erzeugniseigenschaft und eines Lageparameters der mehreren ermittelten tatsächlichen Erzeugniseigenschaften ermittelt. Unter einem Lageparameter ist hierbei vorzugsweise eine mathematische Zusammenfassung der mehreren ermittelten tatsächlichen Erzeugniseigenschaften zu verstehen, insbesondere eine Kennzahl der durch die mehreren ermittelten tatsächlichen Erzeugniseigenschaften verkörperten Stichprobe. Ein solcher Lageparameter kann etwa ein arithmetisches Mittel, ein Median, ein Modus oder dergleichen der mehreren ermittelten tatsächlichen Erzeugniseigenschaften sein.

Beispielsweise kann der Fertigungsprozess mithilfe der Anlage wenigstens drei mal, bevorzugt wenigstens vier mal, insbesondere wenigstens fünf mal, in demselben Betriebspunkt durchgeführt werden. Es hat sich gezeigt, dass mit einer derartigen Anzahl an Fertigungsprozessen pro Betriebspunkt, d. h. an gefertigten Prozesserzeugnissen, Variationen in der tatsächlichen Erzeugniseigenschaft zuverlässig erkannt und entsprechend berücksichtigt, zum Beispiel herausgemittelt, werden können. Gleichzeitig ist bei dieser Anzahl an Fertigungsprozessen pro Betriebspunkt der entstehende Aufwand noch überschaubar.

In einer weiteren bevorzugten Ausführungsform ermittelt der Optimierer den vorgegebenen Betriebsausgangspunkt als optimierten Betriebspunkt, wenn ein Unterschied zwischen der vorgegebenen Erzeugniseigenschaft und der ermittelten tatsächlichen Erzeugniseigenschaft, insbesondere einem die tatsächliche Erzeugniseigenschaft repräsentierenden Zielwert und einem die vorgegebene Erzeugniseigenschaft repräsentierenden vorgegebenen Zielwert, einen Schwellenwert erreicht oder unterschreitet. Anders gesagt schlägt der Optimierer keinen neuen Betriebspunkt als Betriebsausgangspunkt vor, wenn die ermittelte tatsächliche Erzeugniseigenschaft im Wesentlichen mit der vorgegebenen Erzeugniseigenschaft übereinstimmt. Insofern lässt sich eine Schranke einführen, die einen kontinuierlichen Wechsel des Betriebspunkts bei aufeinanderfolgenden Fertigungen des Prozesserzeugnisses im Bereich des optimalen Betriebspunkts verhindern kann. Infolgedessen kann im Regelbetrieb der Anlage eine gleichbleibende Qualität des Prozesserzeugnisses sichergestellt werden.

Dabei ist es ist vorteilhaft, wenn eine Anzahl an Durchführungen des Fertigungsprozesses mithilfe der Anlage in demselben Betriebspunkt zur möglichst präzisen Bestimmung der tatsächlichen Erzeugniseigenschaft in dem Betriebspunkt in Abhängigkeit der Differenz zwischen der vorgegebenen Erzeugniseigenschaft und der ermittelten tatsächlichen Erzeugniseigenschaft, vorzugsweise bis zum Erreichen oder Unterschreiten des Schwellenwerts, erhöht wird. Zweckmäßigerweise wird die Anzahl der Wiederholung derart gewählt, dass die Standardabweichung der Erzeugniseigenschaft kleiner ist als die Differenz. Der Schwellenwert kann entsprechend als ein Wert gewählt werden, gegen den die Standardabweichung der Erzeugniseigenschaft bei einer hohen Anzahl an Wiederholungen des Fertigungsprozesses konvergiert.

In einer weiteren bevorzugten Ausführungsform ist der Optimierer dazu eingerichtet, zu erkennen, ob für die Erzeugung eines Prozesserzeugnisses mit der vorgegebenen Erzeugniseigenschaft mehr als ein optimaler Betriebspunkt existiert. Es ist beispielsweise denkbar, dass eine besondere Materialgüte eines Längsflachwalzgutes mit dem Betrieb eines Walzgerüsts in unterschiedlichen Betriebspunkten erzielbar ist. Zweckmäßigerweise wird in diesem Fall wenigstens einer der ermittelten, mit Blick auf die vorgegebene Erzeugniseigenschaft gleichwertigen Betriebspunkte als optimierter Betriebspunkt ausgegeben. Die Erkennung kann grundsätzlich online während des Fertigungsprozesses oder offline mit aufgezeichneten Daten des Fertigungsprozesses erfolgen.

Liegt der vorgegebene Betriebsausgangspunkt in einem Grenzbereich der Leistungsfähigkeit der Anlage, kann es vorkommen, dass trotzt Einstellens von dem Betriebsausgangspunkt entsprechenden Betriebsparametern die Anlage nicht im gewünschten Betriebspunkt arbeitet. Daher wird in einer weiteren bevorzugten Ausführungsform geprüft, ob der Betrieb der Anlage beim Durchführen des Fertigungsprozesses wenigstens ein vorgegebenes Kriterium erfüllt. Insbesondere kann geprüft werden, ob der Fertigungsprozess im vorgegebenen Betriebsausgangspunkt oder zumindest dessen Nähe durchgeführt wurde. Zu diesem Zweck können aufgezeichnete Daten des Fertigungsprozesses, beispielsweise Stellgrößen der Anlage, ausgewertet werden.

Wird festgestellt, dass der Fertigungsprozess mithilfe der Anlage nicht im gewünschten Betriebspunkt, etwa nicht im vorgegebenen Betriebsausgangspunkt oder nicht einmal in dessen Nähe, durchgeführt wurde, kann die Ermittlung des optimierten Betriebspunkts auf verschiedene Arten erfolgen. Infolgedessen ist es bevorzugt, dass der optimierte Betriebspunkt der Anlage abhängig von einem Ergebnis der Prüfung ermittelt wird.

Zum Beispiel ist es denkbar, dass die Erzeugung des Prozesserzeugnisses im vorgegebenen Betriebsausgangspunkt noch einmal wiederholt wird, in der Hoffnung, dass der Betrieb der Anlage nun das vorgegebene Kriterium erfüllt. Alternativ kann ein neuer Betriebsausgangspunkt vorgegeben werden, der näher an einem Betriebspunkt liegt, in dem der Betrieb der Anlage das Kriterium erfüllt. Gibt der Optimierer den Betriebsausgangspunkt beispielsweise ausgehend von einem Betriebspunkt, etwa einem zuvor ermittelten optimierten Betriebspunkt, vor, und stellt sich heraus, dass in diesem vorgegebenen Betriebsausgangspunkt das Kriterium nicht erfüllt ist, kann der Optimierer als neuen Betriebsausgangspunkt einen Betriebspunkt vorgeben, der zwischen dem vorgegebenen Betriebsausgangspunkt und dem zuvor ermittelten optimierten Betriebspunkt liegt.

Es ist jedoch auch denkbar, dass die ermittelte tatsächliche Erzeugniseigenschaft akzeptiert und zur Ermittlung des (nächsten) optimierten Betriebspunkts herangezogen wird, obwohl das Kriterium nicht erfüllt ist. Beispielsweise kann die ermittelte tatsächliche Erzeugniseigenschaft mit einer Prädiktion des Optimierers verglichen werden. Liegt die tatsächliche Erzeugniseigenschaft näher an der vorgegebenen Erzeugniseigenschaft als eine für den vorgegebenen Betriebsausgangspunkt prädizierte Erzeugniseigenschaft, wird der (nächste) optimierte Betriebspunkt vorzugsweise auf Grundlage der tatsächlich ermittelten Erzeugniseigenschaft ermittelt.

In einer weiteren bevorzugten Ausführungsform wird der optimierte Betriebspunkt vom Optimierer mittels eines Trust-Region-Verfahrens und/oder eines Liniensuchverfahrens ermittelt. Insbesondere kann der optimierte Betriebspunkt mithilfe einer Sequential Quadratic Programming (SQP) Variante des Trust-Region-Verfahrens ermittelt werden. Vorzugsweise ermittelt der Optimierer ausgehend vom vorgegebenen Betriebsausgangspunkt eine "Korrektur" des Betriebspunktes im Sinne des Trust-Region-Verfahrens, insbesondere mit der SQP-Variante durch Lösen eines quadratischen Minimierungsproblems unter Nebenbedingungen. Die "Brauchbarkeit" dieser Korrektur wird zweckmäßigerweise anschließend durch Erzeugen des Prozesserzeugnisses mithilfe der Anlage im optimierten Betriebspunkt und beispielsweise einen Vergleich der entsprechenden tatsächlichen Erzeugniseigenschaft mit der vorgegebenen Erzeugniseigenschaft gemessen. In Abhängigkeit eines Ergebnisses dieser "Messung" können die Nebenbedingungen des quadratischen Minimierungsproblems verändert werden, um in einer weiteren Iteration des Verfahrens eine qualifiziertere Korrektur des (neuen) Betriebsausgangspunktes vornehmen zu können.

Insofern weist der Optimierer bevorzugt einen Optimierungsalgorithmus, insbesondere in Form der SQP-Variante des Trust-Region-Verfahrens oder Reinforcement Learning, auf. Denkbar sind grundsätzlich jedoch auch andere Optimierungsalgorithmen. Um eine Anpassung an geänderte Betriebsbedingungen, zum Beispiel geänderte äußere Einflüsse oder eine Alterung der Anlage, ermöglichen zu können, weist der Optimierungsalgorithmus vorzugsweise kein Abbruchkriterium auf. Die Optimierung des Betriebspunktes bzw. das Verfahren endet insofern vorzugsweise auch dann nicht, wenn die ermittelte tatsächliche Erzeugniseigenschaft im Wesentlichen der vorgegebenen Erzeugniseigenschaft entspricht. Denn zu einem späteren Zeitpunkt können geänderte Betriebsbedingungen dazu führen, dass der Betrieb der Anlage in einem anderen (optimalen) Betriebspunkt notwendig ist, um weiterhin das Prozesserzeugnis mit der vorgegebenen Erzeugniseigenschaft erzeugen zu können.

Insofern eignet sich das Verfahren insbesondere in dieser Ausführungsform, jedoch auch in allen anderen voranstehend beschriebenen Ausführungsformen oder Kombinationen davon, zum regulären, insbesondere dauerhaften, Betreiben einer Anlage.

Gemäß einem zweiten Aspekt der Erfindung wird das Verfahren gemäß dem ersten Aspekt der Erfindung daher zum regulären Betreiben einer Anlage, insbesondere einer Warmwalzanlage, verwendet. Die Anlage kann dabei im Wesentlichen kontinuierlich im Regelbetrieb arbeiten, während der Optimierer iterativ optimierte Betriebspunkte ermittelt und die Anlage nach jeder Iteration im jeweils ermittelten optimierten Betriebspunkt betrieben wird. Dieser Prozess lässt sich vollständig automatisieren, sodass Aufwand und damit auch Kosten nicht nur für die Inbetriebsetzung, sondern auch im Regelbetrieb der Anlage signifikant reduziert werden können.

Ein System gemäß einem dritten Aspekt der Erfindung zum, insbesondere automatischen, Anpassen eines Fertigungsprozesses, insbesondere Warmwalzprozesses, umfasst eine Anlage zum Erzeugen eines Prozesserzeugnisses. Bei der Anlage handelt es sich vorzugsweise um eine Warmwalzanlage, insbesondere ein vertikales Walzgerüst zum Walzen von Längsflachprodukten mit einem nachgeordneten horizontalen Walzgerüst von Längsflachprodukten. Das Prozesserzeugnis ist zweckmäßigerweise erzeugbar, indem ein Fertigungsprozess mithilfe der Anlage in der Nähe eines vorgegebenen Betriebsausgangspunktes ausgeführt wird. Das System umfasst weiter ein Mittel zum Ermitteln einer tatsächlichen Erzeugniseigenschaft des erzeugten Prozesserzeugnisses und einen Optimierer, der dazu eingerichtet ist, einen optimierten Betriebspunkt für die Anlage zu ermitteln auf Grundlage einer vorgegebenen Erzeugniseigenschaft des Prozesserzeugnisses und der ermittelten tatsächlichen Erzeugniseigenschaft. Ein solches System erlaubt die Auswertung des Fertigungsprozesses unter vom Optimierer vorgegebenen, insbesondere testweise gewählten, Rahmenbedingungen, um optimale oder zumindest dem nahekommende Werte für Betriebsparameter zu finden. Das System ermöglicht zudem auch die Berücksichtigung sich ändernder Betriebsbedingungen im Regelbetrieb, zum Beispiel die Änderung äußerer Einflüsse, Änderungen des Anlagenzustands etwa aufgrund von Alterung und/oder einer Änderung der verarbeiteten, etwa gewalzten, Materialien.

Bei der Anlage kann es sich um eine Industrieanlage, beispielsweise eine Warmwalzanlage, handeln. Die Anlage kann beispielsweise eine Gießmaschine zur Herstellung eines metallischen Bands aus geschmolzenem Metall, insbesondere von Brammen, ein vertikales Walzgerüst (das gelegentlich auch als Kantenformer bezeichnet wird) und ein horizontales Walzgerüst zum Reduzieren der Dicke der Brammen aufweisen.

Das Mittel zum Ermitteln einer tatsächlichen Erzeugniseigenschaft kann eine Sensoranordnung aufweisen, welche das Prozesserzeugnis, beispielsweise die Bramme, sensorisch erfassen und aus den erzeugten Sensordaten die tatsächliche Erzeugniseigenschaft ermitteln kann.

Der Optimierer kann hard- und/oder softwaretechnisch ausgebildet sein. Der Optimierer kann insbesondere eine, vorzugsweise mit einem Speicher- und/oder Bussystem daten- bzw. signalverbundene, Verarbeitungseinheit aufweisen. Beispielsweise kann der Optimierer eine Mikroprozessoreinheit (CPU) oder ein Modul einer solchen und/oder ein oder mehrere Programme oder Programmmodule aufweisen. Der Optimierer kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren zumindest teilweise verkörpert bzw. auszuführen imstande ist, sodass der Optimierer zumindest einzelne Schritte solcher Verfahren ausführen kann und damit insbesondere einen optimierten Betriebspunkt der Anlage ermitteln kann.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen, zumindest teilweise schematisch:
- FIG 1: ein Beispiel eines konventionellen Verfahrens zum Inbetriebsetzen einer Anlage;
- FIG 2: ein Beispiel eines Systems zum Anpassen eines Fertigungsprozesses; und
- FIG 3: ein Beispiel eines Verfahrens zum Anpassen eines Fertigungsprozesses.

Soweit zweckdienlich, werden in den Figuren dieselben Bezugszeichen für dieselben oder einander entsprechende Elemente der Erfindung verwendet.

### Beschreibung der Ausführungsformen

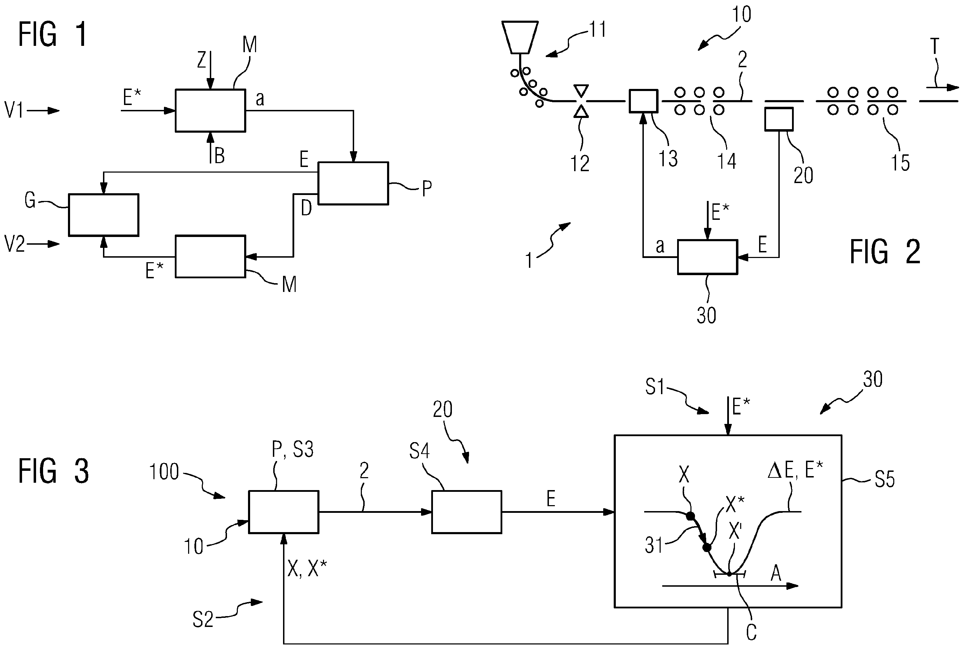

FIG 1 zeigt ein Beispiel eines konventionellen Verfahrens zum Inbetriebsetzen einer Anlage, welche zum Ausführen eines Fertigungsprozesses P eingerichtet ist. Solche Fertigungsprozesse P sind im Allgemeinen von Betriebsbedingungen B und Betriebsparametern der Anlage, die verschiedene Betriebsparameterwerte a annehmen können, abhängig. Je nach Betriebsbedingungen B und zum Beispiel von einem Benutzer gewählten Betriebsparameterwerten a variiert eine Erzeugniseigenschaft E des durch den Fertigungsprozess P erzeugten Prozesserzeugnisses.

Um mit der Anlage bzw. des mit der Anlage durchführbaren Fertigungsprozesses P Prozesserzeugnisse mit einer vorgegebenen Erzeugniseigenschaft E* erzeugen zu können, müssen daher die "richtigen" Betriebsparameterwerte a gefunden werden. Dieser Prozess wird als Inbetriebsetzung bezeichnet.

Dazu kann die Anlage bzw. der Fertigungsprozess P mit einem Modell M abgebildet werden. In dieses Modell M können neben den Betriebsbedingungen B und der gewünschten, vorgegebenen Erzeugniseigenschaft E*, die durch einen sogenannten Zielwert gekennzeichnet sein kann, Modellparameter Z als Eingangsgrößen eingegeben werden. Die Modellparameter Z, welche gelegentlich auch als Inbetriebsetzungs-Parameter (IBS-Parameter) bezeichnet werden, können dem Modell M inhärente Parameter sein, alternativ oder zusätzlich jedoch auch der Setup-Berechnung dienen und/oder den Ablauf eines Algorithmus zur Auswertung des Modells M beeinflussen.

Die Auswertung des Modells M im Verfahrensschritt V1 mit diesen Betriebsbedingungen B, der vorgegebenen Erzeugniseigenschaft E* und den Modellparametern Z liefert Betriebsparameterwerte a. Daneben können mithilfe eines solchen Modells M gegebenenfalls auch sinnvolle Sensitivitäten für eine Regelung der Anlage bzw. des Fertigungsprozesses P ermittelt werden (nicht gezeigt).

Es hat sich in der Praxis jedoch gezeigt, dass durch den Betrieb der Anlage mit den derart ermittelten Betriebsparameterwerten a in der Regel nicht genau die gewünschte, vorgegebene Erzeugniseigenschaft E* erreicht werden kann. Dies ist unter anderem der üblicherweise unvollständigen Erfassung aller Betriebsbedingungen B und der dem Modell M inhärenten Beschränkung bei der Beschreibung der Wirklichkeit (ein Modell M kann die Wirklichkeit nie hundertprozentig exakt beschreiben) geschuldet.

Daher kann versucht werden, die Modellparameter Z in einem weiteren Verfahrensschritt V2 zu optimieren. Die Optimierung erfolgt dabei im Nachgang, d. h. nach dem Durchführen des Fertigungsprozesses P mithilfe der Anlage in einem durch die vom Modell M gelieferten Betriebsparameternwerte a definierten Betriebspunkt. Insofern wird auch von einer offline-Optimierung gesprochen.

Für diese offline-Optimierung werden beim Durchführen des Fertigungsprozesses P mithilfe der Anlage alle relevanten, den Fertigungsprozess P betreffenden Daten D aufgezeichnet. Mit diesen Daten D kann das Modell M abermals ausgewertet werden - nun werden jedoch nicht Betriebsparameterwerte a berechnet, sondern eine zu erwartende Erzeugniseigenschaft E'. Ein Vergleich dieser zu erwartenden Erzeugniseigenschaft E' mit der durch den Fertigungsprozess P tatsächlich erreichten Erzeugniseigenschaft E liefert eine Güte G für die Erzeugniseigenschaft, die durch den mit den modellermittelten Betriebsparameterwerten a ausgeführten Fertigungsprozess P erreichbar ist.

Ist der Zusammenhang zwischen den Modellparametern Z und der Güte G für die erzielbare Erzeugniseigenschaft, d. h. den erreichbaren Zielwert, bekannt, können die Modellparameter Z unter Verwendung der Daten D mit konventionellen Optimierungsmethoden (offline) optimiert werden. Die derart optimierten Modellparameter Z erlauben schließlich die Inbetriebsetzung der Anlage mit den entsprechenden (optimierten) Betriebsparameterwerten a.

Das geschilderte Verfahren ist jedoch nicht anwendbar in Fällen, in denen es kein Modell M gibt, welches den Fertigungsprozess P mit vertretbarem Aufwand gut genug beschreiben kann. Ein Beispiel für einen solchen Fertigungsprozess P ist die Produktion von Bändern mit einer Warmwalzanlage. Eine typische vorgegebene Erzeugniseigenschaft E* ist hierbei eine rechteckige Form der Bandenden bei einer vorgegebenen Breite am Ende des Walzprozesses. Die Bandendenform wird in der Praxis mithilfe einer hydraulischen Anstellung eines Stauchers vor einem Vorwalzgerüst der Warmwalzanlage beeinflusst. Ziel bei der Inbetriebsetzung ist es daher, die richtigen Einstellungen für den Staucher zu finden.

Durch den mit dem Walzen verbundenen Materialfluss ist der Zusammenhang zwischen dem Stauchprozess und der nach dem Walzen resultierenden Bandendenform jedoch äußerst komplex. Daher erfordert es - wenn es überhaupt möglich ist - eine äußerst hohe Rechenleistung, um beispielsweise mithilfe einer Finite-Elemente-Berechnung die Ausformung der Bandenden bei bestimmten Stauchereinstellungen zu simulieren. Aus Rechenzeit- und Genauigkeitsgründen eignet sich ein solches Modell M aber nicht zum Einsatz bei der Inbetriebsetzung einer Anlage, und zu einer kontinuierlichen Steuerung des Stauchprozesses schon gar nicht.

In der Praxis wird deshalb eine parametrierte Kurve als Stellgrößenfunktion für den Staucher vorgegeben. Die Kurvenparameter müssen bei der Inbetriebsetzung manuell an die Betriebsbedingungen der Anlage angepasst werden. Dies erfordert viel Erfahrung des jeweiligen Inbetriebsetzers sowie ein hohen Zeitaufwand, bis die Parameter für das gesamte Produktionsspektrum der Anlage eingestellt sind.

FIG 2 zeigt ein System 1 zum Anpassen eines Fertigungsprozesses, der mithilfe einer Anlage 10 ausführbar und mit dem ein Prozesserzeugnis 2 erzeugbar ist. Die Anlage 10 ist vorliegend als Warmwalzanlage ausgebildet, die zum Warmwalzen eines Metallbands - welches in diesem Beispiel das Prozesserzeugnis 2 darstellt - eingerichtet ist. Die Warmwalzanlage umfasst eine Gießmaschine 11 zum, vorzugsweise kontinuierlichen, Gießen des Metallbands, eine Trenneinrichtung 12 zum Zerteilen des gegossenen Metallbands, ein vertikales Walzgerüst 13 zur Breitenreduzierung des zerteilten Metallbands, ein Vorwalzgerüst 14 für eine erste Dickenreduktion des zerteilten Metallbands sowie ein Fertigwalzgerüst 15 für eine zweite Dickenreduktion des zerteilten Metallbands. Die Warmwalzanlage kann weitere (nicht gezeigte) Komponenten aufweisen, beispielsweise einen oder mehrere Öfen zur (Wieder-) Erwärmung des gegossenen oder zerteilten Metallbands, Entzunderungsstationen zum Entfernen von Zunderschichten, weitere Trenneinrichtungen zum Zerteilen des Metallbands stromabwärts des Vorwalzgerüsts 14 und/oder des Fertigwalzgerüsts 15 sowie eine oder mehrere Haspeln zum Aufwickeln der zerteilten Metallbänder auf Spulen. Nicht gezeigt ist eine Transportvorrichtung zum Transportieren des Prozesserzeugnisses 2 entlang einer Transportrichtung T.

Das System 1 weist zudem ein Mittel 20 zum Ermitteln einer tatsächlichen Erzeugniseigenschaft E des Prozesserzeugnisses 2 sowie einen Optimierer 30 zum Ermitteln eines optimierten Betriebspunkts auf Grundlage der ermittelten tatsächlichen Erzeugniseigenschaft E und einer vorgegebenen Erzeugniseigenschaft E* auf.

Das Mittel 20 weist vorzugsweise eine Sensoranordnung auf, mit der das Prozesserzeugnis 2 sensorisch erfassbar ist. Beispielsweise kann das Mittel 20 einen oder mehrere Sensoren in Form von Kameras, (Abstands-) Ultraschallsensoren, und/oder dergleichen aufweisen.

Zweckmäßigerweise kann auf Grundlage von beim sensorischen Erfassen des Prozesserzeugnisses 2 erzeugten Sensordaten die tatsächliche Erzeugniseigenschaft E des Prozesserzeugnisses 2 ermittelt werden. In der gezeigten Variante kann das Mittel 20 dazu eingerichtet sein. Alternativ kann die Auswertung der Sensordaten im Hinblick auf die tatsächliche Erzeugniseigenschaft E des Prozesserzeugnisses 2 aber auch anderswo stattfinden, zum Beispiel durch den Optimierer 30. Zweckmäßigerweise wird die tatsächlich ermittelte Erzeugniseigenschaft E jedenfalls am Optimierer 30 bereitgestellt.

Im gezeigten Beispiel ist das Mittel 20 in Bezug auf die Transportrichtung T zwischen dem Vorwalzgerüst 14 und dem Fertigwalzgerüst 15 angeordnet. Es sind aber auch andere Anordnungen des Mittels 20 denkbar, beispielsweise stromabwärts des Fertigwalzgerüsts 15.

Der Optimierer 30 kann hard- und/oder softwaretechnisch ausgebildet sein. Der Optimierer 30 kann beispielsweise ein Rechenmittel, zum Beispiel einen Mikroprozessor, und/oder ein mit dem Mikroprozessor signal- oder datenverbundenes Speichermittel aufweisen. Der Optimierer 30 kann insbesondere eine dezidierte, auf die Ermittlung eines optimierten Betriebspunkts ausgelegte Hardwarearchitektur aufweisen. Der Optimierer 30 kann etwa als ASIC ausgebildet sein. Alternativ oder zusätzlich kann der Optimierer 30 beispielsweise ein oder mehrere Softwaremodule aufweisen, die etwa einen Optimierungsalgorithmus verkörpern.

Zweckmäßigerweise ist der Optimierer 30 über eine Schnittstelle mit der Anlage 10 verbunden, um einen Betrieb der Anlage 10 im (neu) ermittelten optimierten Betriebspunkt zu veranlassen, insbesondere um entsprechend optimierte Betriebsparameterwerte a an die Anlage 10 senden zu können.

Das vertikale Walzgerüst 13 ist dazu eingerichtet, die gelegentlich auch als Längsseiten bezeichneten Seitenflächen des zerteilten Metallbands gemäß einer Anstellkurve zu formen, sodass die Seitenflächen über die Länge des zerteilten Metallbands nicht geradlinig verlaufen. Anders gesagt kann das vertikale Walzgerüst 13 die Breite des zerteilen Metallbands beeinflussen. Dieser vorgegebene Verlauf der Seitenflächen soll als Ausgleich für den beim Walzen im Vorwalzgerüst 14 - und gegebenenfalls auch im Fertigwalzgerüst 15 - erzeugten Materialfluss dienen, sodass hinter dem Vorwalzgerüst 14 bzw. dem Fertigwalzgerüst 15 eine rechteckige Form des zerteilten Metallbands erzielt werden kann.

Die Anstellkurve ist zweckmäßigerweise durch einen oder mehrere Betriebsparameter charakterisiert, deren Werte durch den Optimierer 30 vorgebbar sind. Daher ist der Optimierer 30 im vorliegenden Beispiel mit dem vertikalen Walzgerüst 13 signal- oder datenverbunden. Nach dem Erfassen jedes zerteilten Metallbands, insbesondere einer Messung der Bandbreite im Anfangs- und Endbereich jedes Metallbands, durch das Mittel 20 kann der Optimierer 30 in Abhängigkeit der entsprechend ermittelten tatsächlichen Erzeugniseigenschaft E wenigstens einen der Betriebsparameter variieren und dadurch die Anstellkurve ändern. Die daraus resultierende Form der zerteilten Metallbänder kann wieder vom Mittel 20 erfasst werden und der Optimierer 30 abermals einen der Betriebsparameter variieren. Dadurch bildet sich zum Beispiel nach zwanzig solchen Durchgängen eine im Wesentlichen quadratische Form der zerteilten Metallbänder aus.

Figur 3 zeigt ein Beispiel eines Verfahrens 100 zum Anpassen eines Fertigungsprozesses P.

In einem Verfahrensschritt S1 wird eine Erzeugniseigenschaft E* eines Prozesserzeugnisses 2 vorgegeben, welches mit dem Fertigungsprozess P erzeugbar ist. In einem weiteren Verfahrensschritt S3 wird eine Anlage 10, die zum Erzeugen des Prozesserzeugnisses 2 durch Ausführen des Fertigungsprozesses P eingerichtet ist, in einem vorgegebenen Betriebsausgangspunkt X betrieben. Der Betriebsausgangspunkt X wird dazu zuvor in einem Verfahrensschritt S2 vorgegeben.

In einem weiteren Verfahrensschritt S4 wird eine tatsächliche Erzeugniseigenschaft E des durch den Fertigungsprozess P erzeugten Prozesserzeugnisses 2 ermittelt. Dazu kann ein Mittel 20 zum Ermitteln der tatsächlichen Erzeugniseigenschaft E vorgesehen sein. Beispielsweise wird in Verfahrensschritt S4 das erzeugte Prozesserzeugnis 2 sensorisch abgetastet und aus den dabei erzeugten Sensordaten die tatsächliche Erzeugniseigenschaft E abgeleitet.

Die ermittelte tatsächliche Erzeugniseigenschaft E wird einem Optimierer 30 zur Verfügung gestellt. In einem weiteren Verfahrensschritt S5 ermittelt der Optimierer 30 einen optimierten Betriebspunkt X* auf Grundlage der vorgegebenen Erzeugniseigenschaft E* und der ermittelten tatsächlichen Erzeugniseigenschaft E, beispielsweise auf Grundlage einer Güte der ermittelten tatsächlichen Erzeugniseigenschaft E im Hinblick auf die vorgegebene Erzeugniseigenschaft E*.

Beim Ermitteln des optimierten Betriebspunkts X* setzt der Optimierer 30 zweckmäßigerweise einen Optimierungsalgorithmus 31 ein, beispielsweise ein Trust-Region-Verfahren oder ein Liniensuchverfahren. Ausgehend vom gegenwärtigen Betriebsausgangspunkt X der Anlage 10, der durch eine bestimmte Kombination von Werten für die Betriebsparameter A der Anlage 10 gekennzeichnet ist, kann der Optimierungsalgorithmus 31 einzelne Betriebsparameter A variieren. Die Variation erfolgt zweckmäßigerweise gemäß einer dem Optimierungsalgorithmus 31 zugrunde liegenden Optimierungsstrategie. Beispielsweise kann der Optimierungsalgorithmus 31 zum Auffinden eines Minimums in einer Potenziallandschaft aus der Menge aller Betriebspunkte, die die Differenz ΔE,E* zwischen der tatsächlichen Erzeugniseigenschaft E und der vorgegebenen Erzeugniseigenschaft E* widerspiegelt, eingerichtet sein. Im vorliegenden Beispiel ist dies eindimensional angedeutet durch eine Gradientenbestimmung bei Variation eines Betriebsparameters A.

Der in Verfahrensschritt S5 ermittelte optimierte Betriebspunkt X* wird zweckmäßigerweise in einer weiteren Iteration des Verfahrens 100 als Betriebsausgangspunkt X in Verfahrensschritt S2 vorgegeben. D. h., dass sich das Verfahren 100 ab dem Verfahrensschritt S2 wiederholen kann.

Anders als bei konventionellen Optimierungsverfahren ist für das Verfahren 100 kein Abbruchkriterium vorgesehen. D. h., dass die Anlage 10 mithilfe des Verfahrens 100 auch im Regelbetrieb betrieben werden kann. Dadurch lässt sich erreichen, dass auch bei sich ändernden Betriebsbedingungen, welche einen geänderten Betriebspunkt zur Erzeugung des Prozesserzeugnisses 2 mit der vorgegebenen Erzeugniseigenschaft E* erfordern, die Anlage 10 automatisch in diesen geänderten Betriebspunkt überführt wird.

Um zu verhindern, dass der jeweils neu vorgegebene Betriebsausgangspunkt X in einem Bereich C um den optimalen Betriebspunkt X', in dem die Anlage 10 ein Prozesserzeugnis 2 mit der vorgegebenen oder zumindest einer dieser sehr nahekommenden Erzeugniseigenschaft E* erzeugt, unaufhörlich fluktuiert, können jedoch Schranken vorgegeben werden. Beispielsweise kann der vorgegebene Betriebsausgangspunkt X als optimierter Betriebspunkt X* ausgegeben werden, wenn ein Unterschied zwischen der vorgegebenen Erzeugniseigenschaft E* und der ermittelten tatsächlichen Erzeugniseigenschaft E einen Schwellenwert erreicht oder unterschreitet. Damit kann eine "Nachjustierung" des Betriebspunktes der Anlage 10 vermieden werden, sobald der Bereich C, zum Beispiel der "Boden" des in Figur 3 gezeigten Minimums, erreicht ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: System
- 2: Prozesserzeugnis
- 10: Anlage
- 11: Gießmaschine
- 12: Trenneinrichtung
- 13: vertikales Walzgerüst
- 14: Vorwalzgerüst
- 15: Fertigwalzgerüst
- 20: Mittel zum Ermitteln einer tatsächlichen Erzeugniseigenschaft
- 30: Optimierer
- 31: Optimierungsalgorithmus
- 100: Verfahren
- S1-S5: Verfahrensschritte
- V1, V2: Verfahrensschritte
- A: Betriebsparameter
- a: Betriebsparameterwert
- B: Betriebsbedingung
- E: Erzeugniseigenschaft
- E*: Vorgegebene Erzeugniseigenschaft
- E': zu erwartende Erzeugniseigenschaft
- Z: Modellparameter
- M: Modell
- P: Fertigungsprozess
- D: Daten
- G: Güte
- T: Transportrichtung
- X: Betriebsausgangspunkt
- X*: optimierter Betriebspunkt
- X': Optimaler Betriebspunkt
- C: Bereich
- ΔE,E*: Differenz

## Patentansprüche

1. Verfahren (100) zum Anpassen eines Fertigungsprozesses (P), insbesondere eines Warmwalzprozesses, aufweisend die Schritte:
- Vorgeben (S1) einer Erzeugniseigenschaft (E*) eines Prozesserzeugnisses (2);
- Vorgeben (S2) eines Betriebsausgangspunktes (X) einer Anlage (10), insbesondere einer Warmwalzanlage, die zum Ausführen eines Fertigungsprozesses (P) zum Erzeugen des Prozesserzeugnisses (2) eingerichtet ist;
- Erzeugen (S3) des Prozesserzeugnisses (2), indem der Fertigungsprozess (P) mithilfe der Anlage (10) ausgehend vom vorgegebenen Betriebsausgangspunkt (X) ausgeführt wird;
- Ermitteln (S4) einer tatsächlichen Erzeugniseigenschaft (E) des erzeugten Prozesserzeugnisses (2); und
- Ermitteln (S5) eines optimierten Betriebspunktes (X*) der Anlage (10) auf Grundlage der vorgegebenen Erzeugniseigenschaft (E*) und der ermittelten tatsächlichen Erzeugniseigenschaft (E) mithilfe eines Optimierers (30).

2. Verfahren (100) nach Anspruch 1, wobei das Erzeugen des Prozesserzeugnisses (2) mithilfe der Anlage (10) anstelle der Auswertung einer mathematischen Zielfunktion durch den Optimierer (30) durchgeführt wird.

3. Verfahren (100) nach Anspruch 1 oder 2, wobei das Verfahren (100) mit der vorgegebenen Erzeugniseigenschaft (E*) kontinuierlich wiederholt und der jeweils ermittelte optimierte Betriebspunkt (X*) bei der entsprechend darauffolgenden Wiederholung als Betriebsausgangspunkt (X) vorgegeben oder einer Vorgabe des Betriebsausgangspunkts (X) zugrunde gelegt wird.

4. Verfahren (100) nach einem der vorangehenden Ansprüche, wobei
- mehrere Prozesserzeugnisses (2) erzeugt werden, indem der Fertigungsprozess (P) mithilfe der Anlage (10) ausgehend vom vorgegebenen Betriebsausgangspunkt (X) in unterschiedlichen Betriebspunkten durchgeführt wird,
- für jedes erzeugte Prozesserzeugnis (2) die tatsächliche Erzeugniseigenschaft (E) ermittelt wird, und
- der optimierte Betriebspunkt (X*) auf Grundlage der vorgegebenen Erzeugniseigenschaft (E*) und der mehreren ermittelten tatsächlichen Erzeugniseigenschaften (E) ermittelt wird.

5. Verfahren (100) nach Anspruch 4, wobei die Streuung von tatsächlichen Erzeugniseigenschaften (E) von Prozesserzeugnissen (2), die beim mehrmaligen Durchführen des Fertigungsprozesses (P) in demselben Betriebspunkt der Anlage (2) erhalten werden, ermittelt und ein Maß für die ermittelte Streuung einer Ermittlung der unterschiedlichen Betriebspunkte zugrunde gelegt wird.

6. Verfahren (100) nach Anspruch 4 oder 5, wobei die unterschiedlichen Betriebspunkte in der Nähe des vorgegebenen Betriebsausgangspunktes (X) durch Variation jeweils eines von mehreren Betriebsparametern (A) bestimmt werden.

7. Verfahren (100) nach einem der vorangehenden Ansprüche, wobei
- mehrere Prozesserzeugnisse (2) erzeugt werden, indem der Fertigungsprozess (P) mithilfe der Anlage (10) mehrmals in demselben Betriebspunkt durchgeführt wird, und
- für jedes erzeugte Prozesserzeugnis (2) die tatsächliche Erzeugniseigenschaft (E) ermittelt wird, und
- der optimierte Betriebspunkt (X*) auf Grundlage der vorgegebenen Erzeugniseigenschaft (E*) und eines Lageparameters der mehreren ermittelten tatsächlichen Erzeugniseigenschaften (E) ermittelt wird.

8. Verfahren (100) nach Anspruch 7, wobei der Fertigungsprozess (P) mithilfe der Anlage (10) wenigstens drei Mal, bevorzugt wenigstens vier Mal, insbesondere wenigstens fünf Mal, in demselben Betriebspunkt durchgeführt wird.

9. Verfahren (100) nach einem der vorangehenden Ansprüche, wobei der Optimierer (30) den vorgegebenen Betriebsausgangspunkt (X) als optimieren Betriebspunkt (X*) ermittelt, wenn eine Differenz (ΔE,E*) zwischen der vorgegebenen Erzeugniseigenschaft (E*) und der ermittelten tatsächlichen Erzeugniseigenschaft (E) einen Schwellenwert erreicht oder unterschreitet.

10. Verfahren (100) nach Anspruch 9, wobei eine Anzahl an Durchführungen des Fertigungsprozesses (P) mithilfe der Anlage (10) in demselben Betriebspunkt in Abhängigkeit der Differenz (ΔE,E*) zwischen der vorgegebenen Erzeugniseigenschaft (E*) und der ermittelten tatsächlichen Erzeugniseigenschaft (E) erhöht wird.

11. Verfahren (100) nach einem der vorangehenden Ansprüche, wobei der optimierte Betriebspunkt (X*) vom Optimierer (30) mittels eines Trust-Region-Verfahrens und/oder eines Liniensuchverfahrens ermittelt wird.

12. Verfahren (100) nach einem der vorangehenden Ansprüche, wobei geprüft wird, ob der Betrieb der Anlage (10) beim Durchführen des Fertigungsprozesses wenigstens ein vorgegebenes Kriterium erfüllt, und der optimierte Betriebspunkt (X*) der Anlage (10) abhängig von einem Ergebnisses der Prüfung ermittelt wird.

13. Verfahren (100) nach einem der vorangehenden Ansprüche, wobei der Optimierer (30) einen Optimierungsalgorithmus (31) umfasst und der Optimierungsalgorithmus (31) kein Abbruchkriterium aufweist.

14. Verwendung des Verfahrens (100) gemäß einem der vorangehenden Ansprüche zum Betreiben einer Anlage (10), insbesondere einer Warmwalzanlage.

15. System (1) zum Anpassen eines Fertigungsprozesses (P), insbesondere eines Warmwalzprozesses, mit
- einer Anlage (10), insbesondere Warmwalzanlage, zum Erzeugen eines Prozesserzeugnisses (2), indem ein Fertigungsprozess (P) mithilfe der Anlage (10) ausgehend von einem vorgegebenen Betriebsausgangspunkt (X) ausgeführt wird;
- einem Mittel (20) zum Ermitteln einer tatsächlichen Erzeugniseigenschaft (E) des erzeugten Prozesserzeugnisses (2); und
- einem Optimierer (30), der dazu eingerichtet ist, einen optimierten Betriebspunkt (X*) für die Anlage (10) zu ermitteln auf Grundlage einer vorgegebenen Erzeugniseigenschaft (E*) des Prozesserzeugnisses (2) und der ermittelten tatsächlichen Erzeugniseigenschaft (E).
